# EUROPÄISCHE PATENTSCHRIFT

(11) **EP 2 866 524 B1**
(45) Veröffentlichungstag und Bekanntmachung des Hinweises auf die Patenterteilung: **19.12.2018**
(21) Anmeldenummer: 14179928.8
(22) Anmeldetag: 05.08.2014
(51) Int. Cl.: H05B 33/08, B60Q 11/00, B61L 7/10, H05B 37/03, B61L 5/18

(54) **Anordnung und Verfahren zur Überwachung mehrerer LED-Stränge sowie LED-Leuchte mit einer solchen Anordnung**
Assembly and method for monitoring a plurality of LED strings and LED lamp with such an assembly
Système et procédé de surveillance de plusieurs rampes de DEL et éclairage à DEL doté d'un tel système

(30) Priorität: 30.09.2013 DE 102013110838
(43) Veröffentlichungstag der Anmeldung: 29.04.2015
(73) Patentinhaber: Schaltbau Refurbishment GmbH, 46537 Dinslaken (DE)
(72) Erfinder: Krause, Werner, 46535 Dinslaken (DE); Gollbach, Martin, 40670 Meerbusch (DE)
(74) Vertreter: CBDL Patentanwälte

(56) Entgegenhaltungen:
- EP-A2- 1 992 542
- DE-A1-102005 012 625
- DE-A1-102006 056 147
- DE-A1-102008 044 666
- DE-A1-102012 101 363
- US-A- 6 150 771
- US-A1- 2012 313 528

## Beschreibung

### TECHNISCHES GEBIET DER ERFINDUNG

Die Erfindung betrifft eine Kombination einer übergeordneten Anordnung und einer Steuerung sowie
ein Verfahren zur Überwachung mehrerer LED-Stränge sowie eine LED-Leuchte mit einer solchen Anordnung, insbesondere in Form einer Signalleuchte für den See-, Luft-, Straßen- oder Schienenverkehr oder in Form einer Fahrzeugleuchte für ein Wasser, Luft-, Straßen- oder Schienenfahrzeug.

### HINTERGRUND DER ERFINDUNG

Es ist bekannt, Leuchten mit mehreren "Strängen" von Leuchtmitteln auszustatten, die an eine gemeinsame Spannungsquelle ggf. unter Zwischenschaltung von für jeden Strang separaten Vorschalteinheiten angeschlossen werden und die nacheinander, abwechselnd oder ggf. auch gleichzeitig betrieben werden können. Im einfachsten Fall handelt es sich bei den Strängen um zwei Glühfäden, die in einer sog. Zwei-Faden-Glühlampen verwendet und dort üblicherweise als Haupt- und Nebenfaden (auch Ersatzfaden genannt) bezeichnet werden. Dabei dient der Nebenfaden dazu, ein Funktionieren der Glühlampe bei Ausfall des Hauptfadens zu sichern und somit quasi eine interne "Ersatzlampe" zu bilden. Bei Ausfall des Hauptfadens erfolgt die Umschaltung auf den Nebenfaden automatisch, wobei das Umschalten gleichzeitig als Störung erkannt wird, so dass der erforderliche Lampentausch dem Wartungspersonal angezeigt werden kann.
Aufgrund der zahlreichen Vorteile der LED-Technik und der Entwicklung immer leistungsfähigerer LEDs lösen LED-Leuchten in unzähligen, teilweise auch sicherheitsrelevanten Bereichen klassische Leuchtmittel ab.

Während allerdings bei klassischen Leuchtmitteln die Überwachung des korrekten Funktionierens meist einfach realisiert werden kann ist (in der Regel genügt es, zu überwachen, ob Strom durch das Leuchtmittel fließt oder nicht; wenn trotz angelegter Spannung kein Strom durch das Leuchtmittel fließt, kann davon ausgegangen werden, dass das Leuchtmittel defekt ist und getauscht werden muss), ist die Funktionsüberwachung bei LEDs aus verschiedenen Gründen nicht trivial. So kann es z.B. dazu kommen, dass eine LED nicht leuchtet, obwohl Strom durch sie fließt.

Zur sicheren Überwachung wird deshalb bislang pro LED-Strang eine kombinierte Strom-Spannungs-Überwachung eingesetzt, so dass bei N überwachten Strängen (wobei N eine ganze Zahl größer oder gleich 1 bezeichnet), 2 x N Messstellen vorgesehen werden müssen. Jeder Strang kann dabei aus einer oder mehreren LEDs bestehen. Eine Unterbrechung in einer LED führt dazu, dass der Strom über den diese LED enthaltenden Strang auf null zurückgeht. Eine kurzgeschlossene ("durchlegierte") LED führt zu einer verringerten Flussspannung über den diese LED enthaltenden Strang.

Aus der EP 1 992 542 A2 ist eine LED-Anordnung für Lichtsignalgeber mit einem Satz von LED-Strängen bekannt, wobei für jeden LED-Strang des Satzes von LED-Strängen eine als Stromquelle arbeitende Vorschalteinheit vorgesehen ist, die einen Spannungseingang für eine Spannung und einen Leistungsausgang zur Abgabe einer Leistung mit einem Strom und der Spannung an den jeweiligen LED-Strang umfasst. Eine Warnsignaleinrichtung erzeugt ein Warnsignal, wenn ein Strom oder eine Spannung außerhalb bestimmter Soll-Bereiche liegen, wobei die an jedem Strang anliegende Spannung und der durch den jeweiligen Strang fließende Strom an bestimmten Messstellen erfasst werden.

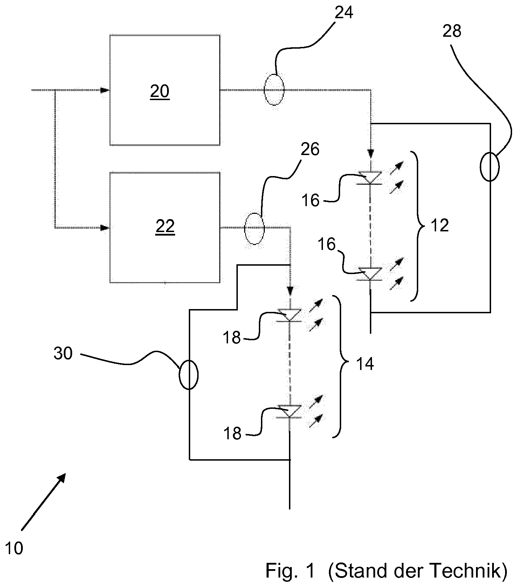

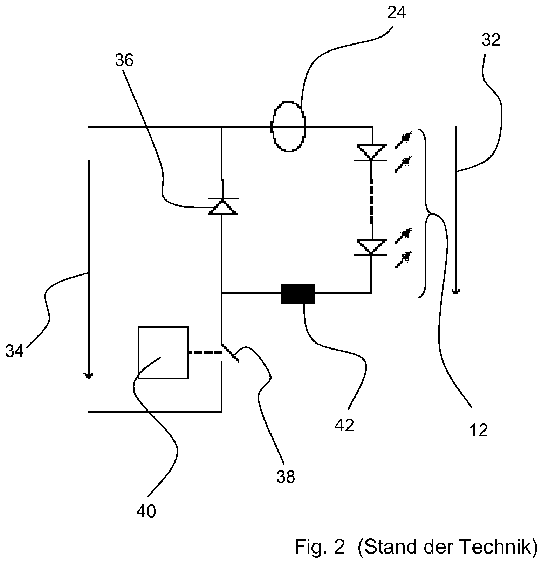

Die aus dem Stand der Technik bekannte Konzeption zur Überwachung von LED-Strängen ist in den Figuren 1 und 2 schematisch veranschaulicht. Fig. 1 zeigt eine in ihrer Gesamtheit mit 10 bezeichnete Anordnung mit bei diesem Beispiel zwei LED-Strängen 12, 14 aus jeweils einer Anzahl von jeweils in Reihe geschalteten LEDs 16, 18, von denen - wie durch die gestrichelten Linien angedeutet - jeweils nur die erste und die letzte LED gezeigt sind und zwischen denen sich weitere LEDs befinden können. Jedem LED-Strang 12, 14 ist eine Vorschalteinheit 20, 22 vorgeschaltet, die einen Spannungseingang für eine Spannung und einen Leistungsausgang zur Abgabe einer Leistung mit einem Strom und einer Spannung an den jeweiligen LED-Strang umfasst. In jedem Strang wird an Messstellen 24, 26 der Strom durch den Strang und an Messstellen 28, 30 die an dem jeweiligen Strang anliegende Spannung gemessen. Weicht einer der gemessenen Werte von einem vorgebbaren Sollwert ab, wird in an sich bekannter und hier nicht weiter dargestellter Weise ein Warnsignal erzeugt, das dann z.B. einer zentralen Steuer- und Überwachungsstelle zugeleitet werden kann, so das Maßnahmen wie z.B. ein Austausch des betroffenen LED-Strangs oder ein Umschalten auf einen anderen Strang veranlasst werden können.

Neben der Tatsache, dass bei der beschriebenen Anordnung für N Stränge 2N Messstellen vorgesehen werden müssen, ist zudem die Spannungsmessung an LEDs, die nicht direkt gegen Masse geschaltet sind, nicht trivial. Fig. 2 zeigt beispielhaft Details eines typischen Aufbaus einer Ausgangsstufe einer LED-Stromquelle des Standes der Technik für eine in Fig. 1 gezeigte Anordnung. Dabei ist dem gezeigten LED-Strang 12 ein Differenzverstärker zur Messung der an dem Strang 12 anliegenden, durch den Pfeil 32 symbolisierten Spannung zugeordnet.

Parallel zu einer Spannungsquelle für eine durch den Pfeil 34 symbolisierte Eingangsspannung ist zusätzlich zum LED-Strang 12 eine Reihenschaltung aus einer Diode 36 und einem Transistorschalter 38 geschaltet, wobei der Transistorschalter 38 mit einer Steuerung 40 geschaltet wird.

Ein Widerstand 42 ist an einem Ende mit dem LED-Strang 12 und an seinem anderen Ende sowohl mit dem Transistorschalter 38 als auch der Diode 36 verbunden. Bei hohen Eingangsspannungen erfordert die Verstärkung der Differenz zwischen den Spannungen 32 und 34 eine hohe Spannungsfestigkeit des Differenzverstärkers mit entsprechendem Hardwareaufwand.

DE 10 2012 101363 A1, DE 10 2008 044666 A1, DE 10 2005 012625 A1 und US 6 150 771 A zeigen jeweils Anordnungen zum nicht gleichzeitigen Einschalten von LEDs mit Diagnosefunktionen für die LEDs. Die Druckschriften DE 197 49 333 A1, DE 10 2006 056147 A1, US 2012/0313528 A1, DE 10 2008 031 793 A1 und US 2009/0102398 A1 zeigen jeweils Anordnungen zur Überwachung eines Satzes von parallel geschalteten LED-Strängen gemäß dem Oberbegriff von Anspruch 1.

### OFFENBARUNG DER ERFINDUNG

Der Erfindung liegt die Aufgabe zugrunde, eine kostengünstige, gleichzeitig aber auch sichere Überwachung mehrerer parallel geschalteter LED-Stränge zu realisieren, bei der die Anzahl der benötigten Messstellen gegenüber dem Stand der Technik reduziert ist, wodurch sich Vorteile bei den Herstellungs-, Betriebs- und Wartungskosten ergeben.

Dazu betrifft die Erfindung eine Kombination nach Anspruch 1.

Die Erfindung beruht auf dem Gedanken, nicht den Strom durch jeden LED-Strang und die Spannung über jeden LED-Strang zu überwachen, sondern die Leistungsaufnahme jeder Vorschalteinheit zu überwachen, da die Leistungsaufnahme der Vorschalteinheiten vom Zustand der LEDs in dem jeweiligen Strang abhängig ist. Beim Ausfall einer LED z.B. durch Kurzschluss oder Unterbrechung ändert sich die Leistungsaufnahme der LED und damit auch diejenige der Vorschalteinheit.

Wie nachfolgend noch dargelegt wird, erniedrigt sich durch die erfindungsgemäße Ausgestaltung die Anzahl der benötigen Messstellen und damit der Hardwareaufwand. Ein weiterer großer Vorteil der Erfindung ist, dass die in Fig. 2 veranschaulichte relativ aufwendige Spannungsmessung an LEDs, die nicht direkt gegen Masse geschaltet sind, entfallen kann.

Die Erfindung betrifft auch ein Verfahren zur Überwachung eines Satzes von parallel geschalteten LED-Strängen nach Anspruch 5.

Weitere Einzelheiten und Vorteile der Erfindung ergeben sich aus der nachfolgenden rein beispielhaften und nicht-beschränkenden Beschreibung von Ausführungsbeispielen in Verbindung mit der Zeichnung.

### KURZE BESCHREIBUNG DER ZEICHNUNG

- Fig. 1: zeigt schematisch eine Anordnung zur Überwachung eines Satzes von parallel geschalteten LED-Strängen gemäß dem Stand der Technik.
- Fig. 2: zeigt schematisch eine Schaltung mit einem Differenzverstärker zur Spannungsmessung bei der in Fig. 1 gezeigten Anordnung.
- Fig. 3: zeigt stark schematisiert ein erstes Ausführungsbeispiel einer Anordnung zur Überwachung eines Satzes von LED-Strängen, wobei die jedem Strang zugeordneten Vorschalteinheiten mit einer konstanten Eingangsspannung versorgt werden.
- Fig. 4: zeigt eine erfindungsgemäße Anordnung, bei der die Eingangsspannung, mit der die Vorschalteinheiten versorgt werden, nicht konstant ist.
- Fig. 5: zeigt eine weiter vereinfachte Anordnung, bei der die Leistungsaufnahme der Vorschalteinheiten summarisch erfasst wird.

### BESCHREIBUNG BEVORZUGTER AUSFÜHRUNGSFORMEN

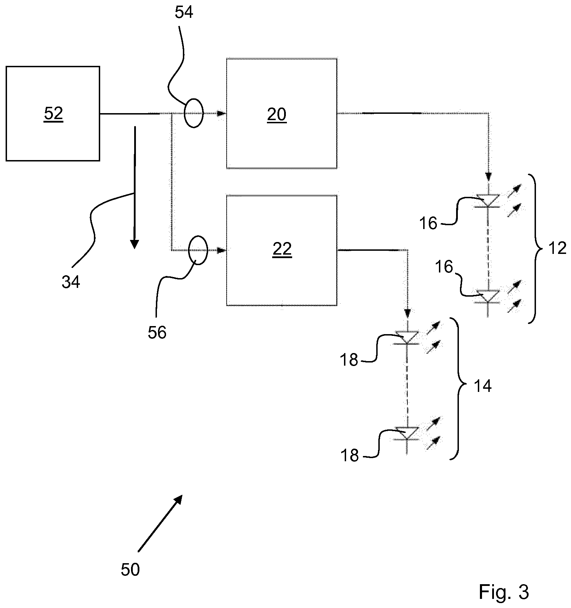

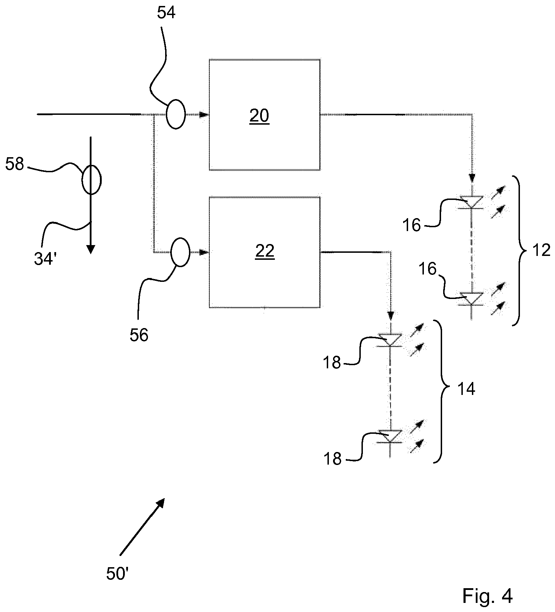

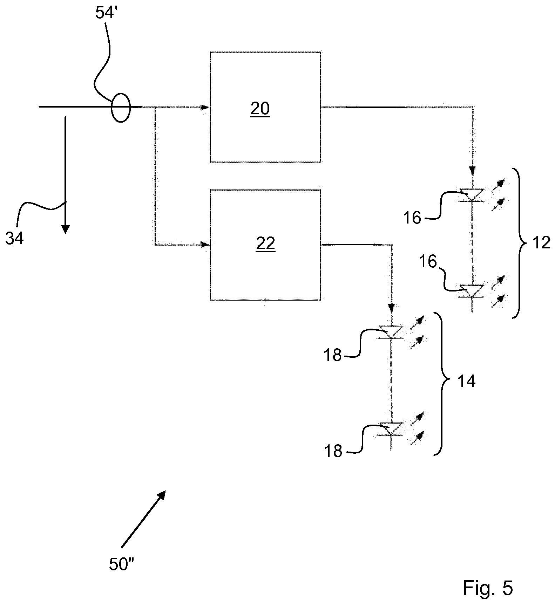

In den Figuren 3 bis 5 sind verschiedene Anordnungen stark schematisiert in Form üblicher Schaltbilder dargestellt. Dabei wurden denjenigen Elementen, die bereits im Zusammenhang mit den Figuren 1 und 2 beschrieben wurden und die aus dem Stand der Technik bekannt sind, die gleichen Bezugszeichen zugeordnet wie den entsprechenden Elementen in den Figuren 1 und 2. Die Figuren 3 und 5 sind zur Bezugnahme gezeigt und beschrieben, während Figur 4 eine erfindungsgemäße Ausführung zeigt.

Alle drei der in den Figuren 3 bis 5 gezeigten Anordnungen 50, 50', 50" umfassen jeweils zwei LED-Stränge 12, 14 aus jeweils einer Anzahl von LEDs 16, 18, wobei jedem LED-Strang 12, 14 eine eigene Vorschalteinheit 20, 22 mit einem Spannungseingang für eine durch den Pfeil 34, 34' symbolisierte Eingangsspannung und einem Stromausgang zur Versorgung des jeweiligen LED-Strangs 12, 14 mit Strom zugeordnet ist. Dabei sei an dieser Stelle betont, dass die Anordnungen natürlich anstelle der gezeigten zwei LED-Stränge mit zwei Vorschalteinheiten auch nahezu beliebig viele weitere LED-Stränge mit jeweils einer entsprechenden Vorschalteinheit umfassen können. Die Anzahl der LEDs 16, 18 in jedem Strang 12, 14 kann gleich oder unterschiedlich sein. Insbesondere sind auch Anwendungsfälle denkbar, bei denen in jedem Strang nur eine einzige LED vorgesehen ist.

Bei der in Fig. 3 gezeigten Anordnung 50 werden alle Vorschalteinheiten 20, 22 mit einer konstanten Eingangsspannung 34 versorgt, wozu die gemeinsame Spannungsquelle als Konstantspannungsquelle 52 ausgebildet ist. Da in diesem Fall die Eingangsspannung an den Vorschalteinheiten 20, 22 bekannt ist, reicht es hier zur Erfassung der Leistungsaufnahme der Vorschalteinheiten aus, mittels jeweils einer Strommessstelle 54, 56 den von den Vorschalteinheiten 20, 22 im Betrieb der Anordnung aufgenommenen Strom zu erfassen. Allerdings kann es selbst dann, wenn eine Konstantspannungsquelle 52 vorgesehen ist, bei bestimmten Anwendungsfällen zweckmäßig sein, trotzdem die Eingangsspannung 34 zu erfassen und mit einem vorgebbaren Sollwert zu vergleichen, um z.B. Fehler in der Versorgung festzustellen und die Fehlerabdeckung zu erhöhen. Dazu kann wie nachfolgend im Zusammenhang mit Fig. 4 beschrieben eine Spannungsmessstelle vorgesehen werden.

In der Fig. 4 ist eine in ihrer Gesamtheit mit 50' bezeichnete Anordnung gezeigt, bei der die Eingangsspannung 34' nicht konstant ist. Typischerweise werden z.B. Signalleuchten im Tag- und Nachtbetrieb mit unterschiedlichen Spannungen betrieben, um tagsüber hellere, nachts dunklere Lichtsignale zu erzeugen. Andere Anwendungsfälle sehen mehr als zwei oder sogar kontinuierlich veränderte Eingangsspannungen zum gestuften oder stufenlosen Dimmen der LEDs vor. Um bei unterschiedlichen Eingangsspannungen zuverlässig aus der von den Vorschalteinheiten 20, 22 aufgenommenen Leistung auf die Funktionstüchtigkeit der LEDs in den jeweiligen Strängen schließen zu können, ist bei veränderlichen Eingangsspannungen eine Messung der jeweiligen Eingangsspannung notwendig, wozu die in Fig. 4 dargestellte Anordnung 50' eine Spannungsmessstelle 58 umfasst. Bei einer solchen Anordnung mit insgesamt N Strängen sind dann N+1 Messstellen notwendig, was gegenüber dem eingangs erwähnten Stand der Technik, bei dem immer 2N Messstellen notwendig sind, insbesondere bei größeren N eine immer noch erhebliche Reduktion von Messstellen darstellt. Eine noch weitere Reduktion der Messstellen lässt sich erzielen, wenn die von den Vorschalteinheiten aufgenommene Leistung nur summarisch erfasst wird, wie dies bei der in Fig. 5 dargestellten Anordnung veranschaulicht ist.

In der Fig. 5 ist eine in ihrer Gesamtheit mit 50" bezeichnete Anordnung gezeigt, bei der mittels einer einzigen Strommessstelle 54' der gesamte von den Vorschalteinheiten 20, 22 im Betrieb aufgenommene Strom summarisch erfasst wird, so dass dann bei bekannter Eingangsspannung 34 bzw., sofern die Eingangsspannung veränderlich ist, gemessener Eingangsspannung die gesamte Leistungsaufnahme der Vorschalteinheiten erfasst und mit einem vorgebbaren Sollwert verglichen werden kann, um so auf Fehlfunktionen zu schließen. Eine solche Anordnung wird es im Regelfall, nämlich dann, wenn die einzelnen Vorschalteinheiten bei normalem Betrieb ähnliche Leistungen aufnehmen, nicht erlauben, aus einer Abweichung der aufgenommenen Gesamtleistung von einem vorgegebenen Sollwert darauf zu schließen, welcher der LED-Stränge eine Fehlfunktion zeigt, jedoch gibt es bestimmte Anwendungen, bei denen es ausreicht, zu detektieren, dass zumindest ein beliebiger der LED-Stränge eine Fehlfunktion zeigt.

Die in den Figuren 3 bis 5 gezeigten Messstellen 54, 54', 56, 58 bilden Leistungserfassungsmittel und damit Teil der Mittel zum Detektieren einer Fehlfunktion in den LED-Strängen. Diese Mittel umfassen ferner eine an sich bekannte und hier nicht weiter dargestellte Auswerteeinheit zur Auswertung der von den Messstellen erfassten Messwerte und zum direkten oder indirekten Vergleichen dieser Werte mit vorgebbaren Sollwerten. Bei der in Fig. 5 gezeigten Anordnung kann beispielsweise vorgesehen sein, dass der von der Messstelle 54' erfasste Stromwert direkt mit einem vorgegebenen Stromwert vergleichen wird (direkter Vergleich). Weicht der Wert um mehr als einen vorgebbaren Toleranzwert nach oben oder unten von einem vorgegebenen Sollwert oder, wenn für unterschiedliche Betriebszustände (z.B. Tag-/Nachtbetrieb) unterschiedliche Sollwerte vorgegeben sind, einem ausgewählten Sollwert ab, kann ein Warnsignal erzeugt und wie eingangs geschildert an eine zentrale Steuer- und Überwachungsstelle geleitet werden. Es kann aber auch vorgesehen sein, dass z.B. aus den wie im Zusammenhang mit Fig. 4 erläutert erfassten Spannungs- und Stromwerten zunächst eine Leistungsaufnahme berechnet und diese dann mit einem oder mehreren verschiedenen vorgebbaren Sollwerten verglichen wird (indirekter Vergleich). Sind verschiedene Sollwerte vorgegeben, kann in an sich ebenfalls bekannter Weise mikrocontrollergesteuert ausgewählt werden, welches der aktuell maßgebliche Sollwert ist.

Bei bestimmten Anwendungsfällen gilt es, einen Satz von wenigstens zwei parallel geschalteten LED-Strängen zu überwachen, wobei jeder LED-Strang eine bestimmte Funktion hat. Ein typisches Beispiel hierfür sind Fahrzeugleuchten mit wenigstens einem Strang roter und einem Strang weißer LEDs, die zum Kenntlichmachen von Schienenfahrzeugen ja nach dessen Fahrtrichtung wechselweise bestrieben werden können. Bei solchen Anwendungsfällen erlaubt es die Erfindung vorteilhaft, die in vielen Ländern vorgeschriebene, in Deutschland für Schienenfahrzeuge durch die EN61508-1 geregelte, Wiederholungsprüfung der Diagnosefunktion zu automatisieren. Dazu können die Vorschalteinrichtungen in einfacher Weise so dimensioniert werden, dass beim Umschalten von einer Funktion auf eine andere Funktion, also z.B. beim Umschalten von rotem Licht auf weißes Licht, für eine gewisse Zeit ein Fehlerzustand erzeugt wird. Dieser wird von den Mitteln zum Detektieren von Fehlfunktionen erkannt, worauf ein entsprechendes Warnsignal erzeugt wird. Eine übergeordnete Steuerung, die das Umschalten ausgelöst hat, kann dann an diesem (erwarteten) Warnsignal erkennen, dass die Mittel zum Detektieren korrekt arbeiten. Werden alle im jeweiligen Anwendungsfall realisierten Funktionen einmal eingeschaltet, so ist eine automatische Wiederholungsprüfung gemäß EN61508-1 durchgeführt. Damit können bislang übliche Testtaster und Wiederholungsprüfintervalle entfallen.

Im Rahmen des Erfindungsgedankens sind zahlreiche Abwandlungen und Weiterbildungen möglich, die sich z.B. auf die Art und Anzahl der Messstellen beziehen. Erfindungswesentlich ist jedenfalls die Idee, nicht mehr direkt die einzelnen LED-Stränge zu überwachen, sondern die Leistungsaufnahme der Vorschalteinheiten, um so quasi indirekt auf das Funktionieren der LED-Stränge zu schließen. Die erfindungsgemäße Anordnung und das erfindungsgemäße Verfahren können vorteilhaft bei völlig unterschiedlichen Anwendungsfällen eingesetzt werden. Ein typischer Anwendungsfall sind Signalleuchten mit mehreren LED-Strängen, die, z.B. zur gleichmäßigen Abnutzung, jeweils alternierend betrieben werden. Wird dann detektiert, dass ein bestimmter Strang ausgefallen ist, kann ein Warnsignal erzeugt werden, das einer zentralen Steuerstelle anzeigt, dass die entsprechende Leuchte alsbald ausgetauscht werden sollte. Bis zum Austausch der Leuchte können dann aber der andere LED-Strang oder die weiteren LED-Stränge verwendet werden.

### BEZUGSZEICHENLISTE

- 10: LED-Mehrstranganordnung
- 12: LED-Strang
- 14: LED-Strang
- 16: LEDs in Strang 12
- 18: LEDs in Strang 14
- 20: Vorschalteinheit zur Versorgung von LED-Strang 12
- 22: Vorschalteinheit zur Versorgung von LED-Strang 14
- 24: Messstelle für Strom im LED-Strang 12
- 26: Messstelle für Strom im LED-Strang 14
- 28: Messstelle für Spannung am LED-Strang 12
- 30: Messstelle für Spannung am LED-Strang 14
- 32: Spannung am LED-Strang 12
- 34, 34': Eingangsspannung
- 36: Diode
- 38: Transistorschalter
- 40: Steuerung
- 42: Widerstand
- 50, 50', 50": LED-Mehrstranganordnung
- 52: Konstantspannungsquelle
- 54, 54': Messstelle für Strom
- 56: Messstelle für Strom
- 58: Messstelle für Spannung

## Patentansprüche

1. Kombination
- einer Anordnung (50; 50'; 50") zur Überwachung eines Satzes von parallel geschalteten LED-Strängen (12, 14) mit unterschiedlichen Funktionen, wobei die LED-Stränge nicht zum gleichzeitigen Betrieb vorgesehen sind, wobei jeder LED-Strang (12, 14) wenigstens eine LED oder eine Reihenschaltung mehrerer LEDs (16, 18) aufweist, und
- einer übergeordneten Steuerung zum Auslösen eines Umschaltens von einer der Funktionen auf eine andere der Funktionen,
- wobei die Anordnung (50, 50', 50") für jeden LED-Strang (12, 14) eine Vorschalteinheit (20, 22) mit einem Spanungseingang für eine Eingangsspannung (34; 34') aus einer gemeinsamen Spannungsquelle und einem Stromausgang zur Versorgung des jeweiligen LED-Strangs (12, 14) mit Strom und Mittel zum Detektieren einer Fehlfunktion in den LED-Strängen (12, 14) und zum Erzeugen eines Warnsignals, wenn eine Fehlfunktion festgestellt wird, umfasst,
- wobei die Mittel zum Detektieren einer Fehlfunktion zwischen die Spannungsquelle und die Vorschalteinheiten (20, 22) geschaltete Leistungserfassungsmittel (54, 56; 54'; 58) zur Erfassung der Leistungsaufnahme der Vorschalteinheiten (20, 22) umfassen und dazu ausgebildet sind, das Warnsignal zu erzeugen, wenn die Leistungsaufnahme von einem vorgebbaren Sollwert abweicht,
**dadurch gekennzeichnet, dass**
- die Leistungserfassungsmittel eine Spannungsmessstelle (58) zur Erfassung der Eingangsspannung (34') umfassen,
- die Vorschalteinheiten der beiden Stränge so ausgelegt sind, dass beim Umschalten von einer der Funktionen auf eine andere der Funktionen ein Fehlerzustand zum Erzeugen des Warnsignals erzeugt wird, und
- die übergeordnete Steuerung dafür ausgelegt ist, um in Erwiderung auf das Auslösen an dem Warnsignal zu erkennen, dass die Mittel zum Detektieren einer Fehlfunktion korrekt arbeiten.

2. Kombination nach Anspruch 1, **dadurch gekennzeichnet, dass** die Leistungserfassungsmittel mehrere Strommessstellen (54, 56) umfassen, wobei jeder Vorschalteinheit (20, 22) jeweils eine Strommessstelle (54, 56) vorgeschaltet ist.

3. Kombination nach Anspruch 1, **dadurch gekennzeichnet, dass** die Leistungserfassungsmittel eine gemeinsame Strommessstelle (54') umfassen, die zwischen die Spannungsquelle und die Vorschalteinheiten (20, 22) geschaltet ist.

4. Kombination nach einem der Ansprüche 1 bis 3, **dadurch gekennzeichnet, dass** die Spannungsquelle als Konstantspannungsquelle (52) ausgebildet ist.

5. Verfahren zum Überwachen eines Satzes von parallel geschalteten LED-Strängen mit unterschiedlichen Funktionen, wobei die LED-Stränge nicht zum gleichzeitigen Betrieb vorgesehen sind, und zum Überwachen einer Fehlerdetektion beim Überwachen des Satzes,
- wobei jeder LED-Strang wenigstens eine LED oder eine Reihenschaltung mehrerer LEDs aufweist,
- wobei jeder LED-Strang über eine Vorschalteinheit, die einen Spannungseingang für eine Eingangsspannung aus einer gemeinsamen Spannungsquelle und einen Stromausgang hat, mit Strom versorgt wird,
- wobei eine Fehlfunktion in den LED-Strängen detektiert und ein Warnsignal erzeugt wird, wenn eine Fehlfunktion festgestellt wird,
- wobei die Leistungsaufnahme der Vorschalteinheiten erfasst und das Warnsignal erzeugt wird, wenn die Leistungsaufnahme von einem vorgebbaren Sollwert abweicht,
- wobei die an die Vorschalteinheiten angelegte Eingangsspannung gemessen und mit einem vorgebbaren Sollwert direkt oder indirekt verglichen wird,
- wobei mit einer übergeordneten Steuerung ein Umschalten von einer der Funktionen auf eine andere der Funktionen ausgelöst wird, bei dem Umschalten ein Fehlerzustand zum Erzeugen des Warnsignals erzeugt wird und mit der übergeordneten Steuerung an dem Warnsignal erkannt wird, dass Mittel zum Detektieren der Fehlfunktion korrekt arbeiten.

6. Verfahren nach Anspruch 5, **dadurch gekennzeichnet, dass** der von jeder Vorschalteinheit aufgenommene Strom erfasst und direkt oder indirekt mit einem vorgebbaren Sollwert verglichen wird.

7. Verfahren nach Anspruch 5, **dadurch gekennzeichnet, dass** der von allen Vorschalteinheiten insgesamt aufgenommene Strom gemessen und mit einem vorgebbaren Sollwert direkt oder indirekt verglichen wird.

8. LED-Leuchte, insbesondere in Form einer Signalleuchte für den See-, Luft-, Straßen- oder Schienenverkehr oder in Form einer Fahrzeugleuchte für ein Wasser, Luft-, Straßen- oder Schienenfahrzeug, **dadurch gekennzeichnet, dass** die Leuchte eine Anordnung nach einem der Ansprüche 1 bis 4 umfasst.

## Claims

1. A combination of
- an assembly (50; 50'; 50") for monitoring a set of parallel-connected LED strings (12, 14) having different functions, said LED strings not being provided for simultaneous operation, wherein each LED string (12, 14) has at least one LED or a plurality of LEDs (16, 18) connected in series, and
- a higher-level control for triggering a switching from one of the functions to another one of the functions,
- wherein said assembly (50, 50', 50"), for each LED string (12, 14), comprises a ballast unit (20, 22) having a voltage input for an input voltage (34, 34') from a common voltage source and a current output for supplying current to the respective LED string (12, 14) and means for detecting a malfunction in the LED strings (12, 14) and generating a warning signal when a malfunction is detected,
- wherein said means for detecting a malfunction comprise power sensing means (54, 56; 54'; 58), connected between the voltage source and the ballast units (20, 22), for sensing the power consumption of said ballast units (20, 22), and are configured to generate said warning signal when the power consumption deviates from a predefinable setpoint,
**characterized in that**
- said power sensing means comprise a voltage measuring point (58) for sensing said input voltage (34'),
- said ballast units of the two strings are designed so that an error state for generating said warning signal is generated when switching from one of the functions to another one of the functions, and
- said higher-level control is designed to recognize on the warning signal, in response to the triggering, that said means for detecting a malfunction work correctly.

2. The combination according to claim 1, **characterized in that** said power sensing means comprise a plurality of current measuring points (54, 56), wherein a current measuring point (54, 56) is connected upstream of each ballast unit (20, 22) in each case.

3. The combination according to claim 1, **characterized in that** said power sensing means comprise a common current measuring point (54') which is connected between said voltage source and said ballast units (20, 22).

4. The combination according to any one of claims 1 to 3, **characterized in that** said voltage source is formed as a constant voltage source (52).

5. A method for monitoring a set of parallel-connected LED strings with different functions, said LED strings not being provided for simultaneous operation, and for monitoring an error detection when monitoring said set,
- wherein each LED string has at least one LED or a plurality of LEDs connected in series,
- wherein current is supplied to each LED string by means of a ballast unit with a voltage input for an input voltage from a common voltage source and a current output,
- wherein a malfunction in the LED strings is detected and a warning signal is generated when a malfunction is detected,
- wherein the power consumption of the ballast units is sensed and the warning signal is generated when the power consumption deviates from a predefinable setpoint,
- wherein the input voltage applied to said ballast units is measured and compared directly or indirectly with a predefinable setpoint,
- wherein switching from one of the functions to another one of the functions is triggered by a higher-level control, an error state for generating said warning signal is generated upon said switching, and using said higher-level control, it is recognized on the warning signal that means for detecting said malfunction work correctly.

6. The method according to claim 5, **characterized in that** the current consumed by each ballast unit is sensed and compared directly or indirectly with a predefinable setpoint.

7. The method according to claim 5, **characterized in that** the total current consumed by all ballast units is measured and compared directly or indirectly with a predefinable setpoint.

8. An LED lamp, in particular in the form of a signal lamp for the sea, air, road or rail traffic or in the form of a vehicle lamp for a water, air, road or rail vehicle, **characterized in that** said lamp comprises an assembly according to any one of claims 1 to 4.

## Revendications

1. Combinaison
- d'un système (50 ; 50' ; 50") de surveillance d'un jeu de rampes de DEL (12, 14) montées en parallèle dotées de différentes fonctions, les rampes de DEL n'étant pas prévues pour un fonctionnement simultané, chaque rampe de DEL (12, 14) présentant au moins une DEL ou un montage en série de plusieurs DEL (16, 18), et
- d'une commande supérieure pour déclencher une commutation d'une des fonctions sur une autre des fonctions,
- le système (50 ; 50' ; 50") comprenant pour chaque rampe de DEL (12, 14) une unité en amont (20, 22) avec une entrée de tension pour une tension d'entrée (34 ; 34') provenant d'une source de tension commune et une sortie de courant pour l'alimentation de la rampe de DEL (12, 14) respective en courant et des moyens pour la détection d'un dysfonctionnement dans les rampes de DEL (12, 14) et pour la génération d'un signal d'avertissement lorsqu'un dysfonctionnement est détecté,
- les moyens pour la détection d'un dysfonctionnement comprenant des moyens de saisie de la puissance (54, 56 ; 54' ; 58) montés entre la source de tension et les unités en amont (20, 22) pour la saisie de la puissance absorbée des unités en amont (20, 22) et étant configurés de telle sorte à générer le signal d'avertissement lorsque la puissance absorbée diffère d'une valeur de consigne pouvant être prédéfinie,
**caractérisée en ce que**
- les moyens de saisie de la puissance comprennent un point de mesure de la tension (58) pour la saisie de la tension d'entrée (34'),
- les unités en amont des deux rampes sont conçues de telle sorte qu'un état de défaut est généré pour la génération du signal d'avertissement lors de la commutation d'une des fonctions sur une autre des fonctions, et
- la commande supérieure est conçue afin de détecter, en réponse au déclenchement au signal d'avertissement, si les moyens pour la détection d'un dysfonctionnement travaillent correctement.

2. Combinaison selon la revendication 1, **caractérisée en ce que** les moyens de saisie de la puissance comprennent plusieurs points de mesure du courant (54, 56), un point de mesure du courant (54, 56) étant monté respectivement en amont de chaque unité en amont (20, 22).

3. Combinaison selon la revendication 1, **caractérisée en ce que** les moyens de saisie de la puissance comprennent un point de mesure du courant (54') commun qui est monté entre la source de tension et les unités en amont (20, 22).

4. Combinaison selon l'une des revendications 1 à 3, **caractérisée en ce que** la source de tension est formée comme une source de tension constante (52).

5. Procédé de surveillance d'un jeu de rampes de DEL montées en parallèle dotées de différentes fonctions, les rampes de DEL n'étant pas prévues pour un fonctionnement simultané, et de surveillance d'une détection d'erreur en surveillant la rampe,
- chaque rampe de DEL présentant au moins une DEL ou un montage en série de plusieurs DEL,
- chaque rampe de DEL étant alimentée en courant par une unité en amont comprenant une entrée de tension pour une tension d'entrée provenant d'une source de tension commune et une sortie de courant,
- un dysfonctionnement dans les rampes de DEL étant détecté et un signal d'avertissement étant généré lorsqu'un dysfonctionnement est détecté,
- la puissance absorbée des unités en amont étant saisie et le signal d'avertissement étant généré lorsque la puissance absorbée diffère d'une valeur de consigne pouvant être prédéfinie,
- la tension d'entrée appliquée sur les unités en amont étant mesurée et comparée directement ou indirectement avec une valeur de consigne pouvant être prédéfinie,
- une commutation d'une des fonctions sur une autre des fonctions étant déclenchée avec une commande supérieure, un état de défaut étant généré pour la génération du signal d'avertissement lors de la commutation et qu'il est détecté au signal d'avertissement avec la commande supérieure que des moyens pour la détection du dysfonctionnement travaillent correctement.

6. Procédé selon la revendication 5, **caractérisé en ce que** le courant consommé par chaque unité en amont est saisi et comparé directement ou indirectement avec une valeur de consigne pouvant être prédéfinie.

7. Procédé selon la revendication 5, **caractérisé en ce que** le total du courant consommé par toutes les unités en amont est mesuré et comparé directement ou indirectement avec une valeur de consigne pouvant être prédéfinie.

8. Éclairage à DEL, notamment sous la forme d'une lampe de signalisation pour le trafic maritime, aérien, routier ou ferroviaire ou sous la forme d'un feu de véhicule pour un bateau, un avion, un véhicule routier ou un véhicule ferroviaire, **caractérisé en ce que** l'éclairage comprend un système selon l'une des revendications 1 à 4.
